# EUROPÄISCHE PATENTSCHRIFT

(11) **EP 3 278 315 B1**
(45) Veröffentlichungstag und Bekanntmachung des Hinweises auf die Patenterteilung: **25.08.2021**
(21) Anmeldenummer: 16708601.6
(22) Anmeldetag: 04.03.2016
(51) Int. Cl.: G08G 1/14, G01C 21/36, G08G 1/0968

(54) **VERFAHREN ZUM ERMITTELN EINES GEEIGNETEN PARKPLATZES, KRAFTFAHRZEUG UND SERVER**
METHOD FOR IDENTIFYING A SUITABLE PARKING SPACE, MOTOR VEHICLE, AND SERVER
PROCÉDÉ POUR DÉTERMINER UNE PLACE DE STATIONNEMENT APPROPRIÉE, VÉHICULE À MOTEUR ET SERVEUR

(30) Priorität: 02.04.2015 DE 102015004369
(43) Veröffentlichungstag der Anmeldung: 07.02.2018
(73) Patentinhaber: Audi AG, 85045 Ingolstadt (DE)
(72) Erfinder: ROTH, Erwin, 85283 Wolnzach (DE); SCHULLER, Florian, 85737 Ismaning (DE); LENZ, David, 81545 München (DE); MINNERUP, Pascal, 80333 München (DE); CHEN, Chao, 80809 München (DE)
(86) Internationale Anmeldenummer: PCT/EP2016/000389
(87) Internationale Veröffentlichungsnummer: WO 2016/155865

(56) Entgegenhaltungen:
- EP-A1- 2 567 371
- DE-A1- 19 930 796
- DE-A1-102009 042 627
- US-A1- 2012 188 100

## Beschreibung

Die Erfindung betrifft ein Verfahren zum Ermitteln eines geeigneten Parkplatzes für ein Kraftfahrzeug sowie einer dorthin führenden Route.

Es sind Parkassistenzsysteme beziehungsweise Betriebsverfahren für Kraftfahrzeuge bekannt, welche einen Benutzer des Kraftfahrzeugs unterstützen, assistiert oder pilotiert, also autonom, in Parklücken oder Garagen ein-und/oder aus Parklücken oder Garagen auszuparken. Ebenso ist im Stand der Technik bekannt, dass Kraftfahrzeuge mit Navigationseinrichtungen ausgestattet sind, die zusammen mit einer Steuerungseinrichtung ein pilotiertes, also autonomes, oder teilautonomes beziehungsweise assistiertes Fahren ermöglichen.

Die üblicherweise in Kraftfahrzeugen vorhandenen gespeicherten Streckenabschnitte einer Navigationseinrichtung umfassen jedoch keine detaillierten Informationen zum Ermitteln einer Route innerhalb von Parkflächen, wie Parkhäusern, Parkplätzen oder Privatgrundstücken, welche vom öffentlichen Straßennetz her erreichbar sind. Das Speichern von detaillierten Informationen zu allen derartigen Parkflächen, würde selbst unter Begrenzung auf ein Land beziehungsweise eine Stadt einen hohen Bedarf an Speicherplatz in der Navigationseinrichtung erfordern. Ferner wäre, um den Datenbestand stets aktuell zu halten, eine Verbindung zu einem Server erforderlich, die ebenfalls einen hohen Datenverkehr verursachen würde.

Aus US 2012/0188100 A1 ist ein Verfahren zum Zuweisen und autonomen Anfahren eines Parkplatzes bekannt. Dabei ist eine Kartenverwaltungseinrichtung vorgesehen, welche einem Benutzer eine Karte der Parkfläche bereitstellt. Über ein mobiles Terminal wird dem Benutzer die bereitgestellte Karte mit den zur Verfügung stehenden Parkplätzen angezeigt, wobei von dem Benutzer ein optimaler Parkplatz ausgewählt werden kann.

Der Erfindung liegt daher die Aufgabe zugrunde, ein demgegenüber verbessertes Verfahren anzugeben.

Die Aufgabe wird durch ein Verfahren gemäß Anspruch 1 gelöst.

Die Erfindung beruht auf der Idee, dass mittels des mehrstufigen erfindungsgemäßen Verfahrens bereits vor Erreichen der Parkfläche Informationen mit einem externen Server ausgetauscht werden, um die Erreichbarkeit des entsprechenden Parkplatzes auf Basis der fahrzeugspezifischen Eigenschaft zu überprüfen. Als Server kann hierbei jeglicher Kartenserver beziehungsweise jedes Leitsystem für die entsprechende Parkfläche verstanden werden. Es sind auch mehrere Server gleichzeitig möglich, bei denen jeweils einem Server spezifische Parkplätze oder Parkflächen zugeordnet sind. Im Rahmen dieser Anmeldung wird unter Parkfläche eine Gesamtheit von Parkplätzen verstanden, die in einer gewissen, beispielsweise räumlichen, Verbindung stehen. Als Parkfläche kann hierbei beispielsweise ein Parkhaus verstanden werden, dem die einzelnen Parkplätze des Parkhauses zugeordnet sind. Die Gesamtheit der Parkplätze bildet somit das Parkhaus, also die Parkfläche.

Ferner ist erfindungsgemäß vorgesehen, dass der Detailgrad der ausgetauschten Informationen zwischen dem Fahrzeug und dem Server je Stufe ansteigt. Dies bietet den Vorteil, dass Parkflächen beziehungsweise einzelne Parkplätze einer Parkfläche, die nicht geeignet sind, bereits in einem frühen Stadium des Verfahrens nicht mehr berücksichtigt werden müssen. Dadurch reduziert sich das benötigte Datenvolumen beziehungsweise der Datenverkehr zwischen der Navigationseinrichtung und dem Server.

Zunächst wird im erfindungsgemäßen Verfahren wenigstens eine eine Parkplatzsuche betreffende Information bei dem externen Server angefragt. Dies geschieht durch die Navigationseinrichtung des Kraftfahrzeugs, die somit zur bidirektionalen Kommunikation mit dem wenigstens einen Server ausgebildet ist. Die Anfrage erfolgt vor Erreichen der Parkfläche, so dass bereits im Vorfeld beziehungsweise vor Erreichen der Parkfläche eine Überprüfung möglich ist, die Rückschlüsse darüber liefert, ob in der entsprechenden Parkfläche ein Parkplatz für das Kraftfahrzeug verfügbar ist. Die Anfrage kann hierbei auf verschiedene Arten initiiert werden. Beispielsweise kann ein Nutzer die Anfrage auslösen, indem er beispielsweise in der Navigationseinrichtung eingibt, wo er parken möchte. Ferner ist es möglich, durch die geographische Nähe des Kraftfahrzeugs oder eines Ziels der Navigation durch die Navigationseinrichtung zu einer entsprechenden Parkfläche eine Anfrage auszulösen. Darüber hinaus sind Bewegungsprofile möglich, die Gewohnheiten eines Benutzers des Kraftfahrzeugs hinsichtlich der benutzten Parkplätze berücksichtigen. In dieser Stufe des Verfahrens können selbstverständlich auch mehrere Server hinsichtlich verfügbarer Parkplätze angefragt werden.

Hierbei kann insbesondere vorgesehen sein, dass die Anfrage mindestens eine Information darüber enthält, welche Fahrzeugklasse beziehungsweise welche ungefähren Abmessungen des Kraftfahrzeugs ein Parkplatz bieten soll, beziehungsweise die Route dorthin ermöglicht.

In einer weiteren Stufe des Verfahrens wird die von der Navigationseinrichtung angefragte Information von dem externen Server an die Navigationseinrichtung des Kraftfahrzeugs gesendet. Insbesondere können hierbei alle Parkplätze oder beispielsweise nur freie beziehungsweise verfügbare Parkplätze anzeigbar beziehungsweise übermittelbar sein.

Auf Basis der übermittelten Information wird eine Routensuche durchgeführt, die eine Route von einem Startknoten zu einem Zielknoten bestimmt. Dies geschieht durch die Navigationseinrichtung. Hierbei wird eine erste grundsätzliche Erreichbarkeitsprüfung des wenigstens einen Zielknotens von dem wenigstens einen Startknoten aus bestimmt. Die Route besteht hierbei aus einzelnen Streckensegmenten, die zwischen einzelnen Knoten verlaufen. Die einzelnen Streckensegmente, die zum Erreichen des Zielknotens von dem Startknoten aus bestimmt werden, werden nachfolgend als Route beziehungsweise als Graph bezeichnet. Diese Stufe des erfindungsgemäßen Verfahrens liefert als Ergebnis bevorzugt eine sortierte Liste von Segmenten, die zum Erreichen des Zielknotens vom Startknoten aus benötigt beziehungsweise verfügbar sind.

Es wird somit wenigstens ein Streckensegment identifiziert, das zum Erreichen des wenigstens einen Zielknotens von dem wenigstens einen Startknoten aus benötigt wird. Anschließend wird eine zweite Erreichbarkeitsprüfung durchgeführt die gegenüber der ersten Erreichbarkeitsprüfung in wenigstens einer Prüfeigenschaft detaillierter ist. Auf Basis dieser Erreichbarkeitsprüfung können vom Sever detailliertere Streckensegmente bezogen werden, die Details über die geometrische Form der Segmente und/oder einer Referenzbahn innerhalb des Streckensegments beziehungsweise deren Lokalisierung in Bezug auf die Parkfläche enthalten können. Im Rahmen dieser zweiten Erreichbarkeitsprüfung kann ferner präziser auf die Abmessungen beziehungsweise einzelne Eigenschaften des Kraftfahrzeugs eingegangen werden. Zusätzlich kann innerhalb dieser Stufe des erfindungsgemäßen Verfahrens eine für wenigstens einen Parameter des Kraftfahrzeugs spezifische Eignungsprüfung wenigstens eines Parkplatzes der Parkfläche durchgeführt werden. Im Rahmen dieser Eignungsprüfung kann überprüft werden, ob sich der entsprechende Parkplatz der Parkfläche für das Kraftfahrzeug eignet. Hier kann insbesondere auch berücksichtigt werden, ob spezielle Parameter des Kraftfahrzeugs vorliegen, ob dieses beispielsweise einen Ladeanschluss oder weitere Einrichtungen benötigt, die der Parkplatz bevorzugt zur Verfügung stellt.

Die nächste Stufe des erfindungsgemäßen Verfahrens sieht vor, dass das wenigstens eine identifizierte Streckensegment von dem externen Server in die Navigationseinrichtung des Kraftfahrzeugs geladen wird. Somit stehen die benötigten beziehungsweise das benötigte Streckensegment zur Verfügung, so dass in einer letzten Stufe des erfindungsgemäßen Verfahrens wenigstens eine kollisionsfreie Route berechnet werden kann. Hierüber kann die Transit-Route vom Startknoten zum Zielknoten berechnet werden. Ebenfalls kann Bestandteil der Route sein, dass ein lokaler Ein- beziehungsweise Ausparkvorgang in der Route berücksichtigt wird. Insbesondere kann mehr als eine Route berechnet werden, wobei die mehreren Routen sonach wiederum hinsichtlich einer Nutzerpräferenz beziehungsweise hinsichtlich eines weiteren Optimierungsparameters, beispielsweise eine Kostenfunktion, die Fahrtdauer oder die zum Befahren der entsprechenden Route benötigten Manöver gewichtet beziehungsweise sortiert werden können.

Erfindungsgemäß werden sonach Geometriedaten des Parkhauses mit den Geometriedaten des Kraftfahrzeugs verglichen, und somit eine Eignungsprüfung des Parkplatzes sowie eine Erreichbarkeitsprüfung desselben durchgeführt. Für die Erreichbarkeitsprüfung können insbesondere spezifische Kraftfahrzeugparameter sowie die genauen Abmessungen des Parkhauses verwendet werden. Beispielsweise zu nennen wären hierbei der Radstand, die Spurbreite und die Außenabmessungen des Kraftfahrzeugs.

Besonders bevorzugt kann bei dem erfindungsgemäßen Verfahren vorgesehen sein, dass ein momentaner Standort des Kraftfahrzeug oder ein mittels der Navigationseinrichtung bestimmter Ankunftsort des Kraftfahrzeugs an einer Parkfläche als Startknoten verwendet wird. Dies bietet den Vorteil, dass für das Kraftfahrzeug direkt vom momentanen Standort, von dem aus die Anfrage an den Server erfolgt, eine Route berechnet werden kann.

Ferner ist besonders vorteilhaft, dass ein Parkplatz oder eine gewünschte Zielposition des Kraftfahrzeugs innerhalb eines Parkplatzes als Zielknoten verwendet wird. Sonach ist es möglich, dass das Kraftfahrzeug vom momentanen Standort bis zu dem gewünschten Parkplatz geleitet wird, beziehungsweise dass eine entsprechende Route berechnet wird. Insbesondere kann hierbei eine Zielposition des Kraftfahrzeugs innerhalb des Parkplatzes als Zielknoten verwendet werden, was den Vorteil bietet, dass auch eine Ausrichtung des Kraftfahrzeugs in dem Parkplatz beziehungsweise eine Position relativ zum Parkplatz als Zielknoten ausgewählt werden kann. Insbesondere im Hinblick auf Einrichtungen, die bei dem entsprechenden Parkplatz vorgesehen sind, ist dies vorteilhaft. Beispielsweise kann ein Elektrofahrzeug über die Zielposition des Kraftfahrzeugs innerhalb eines Parkplatzes eine Anordnung eines Ladeanschlusses im Hinblick auf eine am Parkplatz verfügbare Ladesäule beziehungsweise Ladestation berücksichtigen.

Ferner kann vorgesehen sein, dass die Zielposition innerhalb eines Parkplatzes anhand wenigstens eines detaillierten Streckensegments und/oder einer geometrischen Gegebenheit und/oder abhängig von einer Position einer Laderampe und/oder einer Position einer Ladeeinrichtung und/oder abhängig von einer Nutzerpräferenz bestimmt wird. Die Zielposition beziehungsweise der Zielknoten, der die Zielposition innerhalb eines Parkplatzes betrifft, kann sonach durch den Benutzer oder aufgrund einer am Parkplatz vorhandenen Gegebenheit beziehungsweise eines Parameters des Parkplatzes bestimmt werden.

Das erfindungsgemäße Verfahren kann ferner dahingehend weitergebildet werden, dass das wenigstens eine Streckensegment wenigstens eine Information umfasst, die wenigstens eine Geometrie des Fahrwegs und/oder eine Referenzbahn und/oder eine Lokalisierung des Streckensegments in der Parkfläche und/oder eine Sensormodalität und/oder einen Parkplatz und/oder ein Flottendatum und/oder ein Hindernis und/oder einen verfügbaren Manöverraum betrifft. Demnach kann je nach dem entsprechenden Kraftfahrzeug, für das ein Parkplatz gesucht wird, sichergestellt werden, dass der gefundene Parkplatz auch erreichbar ist. Insbesondere bei Kraftfahrzeugen, deren Abmessungen über die von üblichen Kraftfahrzeugen hinausgeht, beispielsweise durch Spoiler, Anbauteile oder durch Fahrzeugklassen bedingt größere Abmessungen, kann sichergestellt werden, dass die Route zu dem entsprechenden Parkplatz auch befahrbar ist. Insbesondere hinsichtlich des Wendekreises beziehungsweise der Außenabmessungen des Kraftfahrzeugs kann so vermieden werden, dass ein Parkplatz angefahren werden soll, der nicht erreichbar ist.

Es ist hierbei möglich, dass das Befahren der berechneten Route teilautonom oder autonom oder manuell erfolgen kann. Zunächst kann eine Steuerungseinrichtung des Kraftfahrzeugs aufgrund der Daten der Navigationseinrichtung Steuerbefehle erzeugen, um das Kraftfahrzeug auf der berechneten Route autonom also pilotiert zu steuern und bevorzugt einzuparken. Es ist ebenso möglich, dass dem Fahrer mittels eines teilautonomen Betriebsmodus die Fahraufgaben weitgehend abgenommen werden, so dass dieser beispielsweise durch das Parkhaus bis zum entsprechenden Parkplatz fährt und das Kraftfahrzeug dort autonom von der Steuerungseinrichtung eingeparkt wird. Ebenso ist es möglich, dass der Einparkvorgang beziehungsweise der Transitvorgang von dem Startknoten zu dem Zielknoten durch entsprechende Assistenzsysteme unterstützt wird. Es ist ebenso möglich, dass der Fahrer das Kraftfahrzeug manuell steuert und mittels der Navigationseinrichtung lediglich Hinweise darüber gegeben werden, wie die Route durch das Parkhaus beziehungsweise die Parkfläche verläuft.

Besonders bevorzugt kann bei dem erfindungsgemäßen Verfahren vorgesehen sein, dass die Anfrage der Navigationseinrichtung wenigstens ein für das Kraftfahrzeug spezifisches Filterkriterium enthält. Insbesondere kann hierbei die Fahrwegbreite, sowohl die benötigte, als auch die verfügbare, sowie Wahrnehmungsfähigkeiten, im Hinblick auf die Sensorreichweite beziehungsweise eine Auflösung der verfügbaren Sensoren, sowie eine zeitliche Verfügbarkeit des entsprechenden Parkplatzes berücksichtigt werden. Selbstverständlich ist diese Aufzählung nicht abschließend, sondern lediglich beispielhaft zu verstehen und alle weiteren Parameter, die auf eine Erreichbarkeit beziehungsweise die Verfügbarkeit eines Parkplatzes Rückschlüsse liefern, können ebenso verwendet werden.

Eine Weiterbildung des erfindungsgemäßen Verfahrens kann darin bestehen, dass in dem externen Server eine Vorfilterung durchgeführt wird, in der die wenigstens eine an die Navigationseinrichtung des Kraftfahrzeugs zu übertragende Information entsprechend wenigstens einer spezifischen Eigenschaft des Kraftfahrzeugs gefiltert wird. Dies bietet den Vorteil, dass das Datenaufkommen zwischen der Navigationseinrichtung und dem Server weiter reduziert werden kann, da bereits in dem Server eine Vorfilterung der entsprechenden Parkplätze beziehungsweise Parkflächen durchgeführt werden kann, die im Hinblick auf eine kollisionsfreie Erreichbarkeit durch das Kraftfahrzeug ausgeschlossen werden können.

Besonders bevorzugt kann bei dem erfindungsgemäßen Verfahren vorgesehen sein, dass das Kraftfahrzeug von dem Startknoten zu dem Zielkonten autonom oder teilautonom oder manuell bewegt wird.

Es ist ein Kraftfahrzeug mit einer Navigationseinrichtung denkbar, das zur Durchführung des erfindungsgemäßen Verfahrens ausgebildet ist.

Ferner ist ein Server mit wenigstens einer Kommunikationseinrichtung, die zur Kommunikation mit wenigstens einer Navigationseinrichtung eines Kraftfahrzeugs ausgebildet ist, denkbar, wobei der Server zur Durchführung des erfindungsgemäßen Verfahrens ausgebildet ist.

Selbstverständlich sind alle Einzelheiten und Merkmale des erfindungsgemäßen Verfahrens sowohl auf das denkbare Kraftfahrzeug als auch auf den denkbaren Server übertragbar.

Die Erfindung wird nachfolgend anhand eines Ausführungsbeispiels unter Bezugnahme auf die Zeichnungen näher erläutert. Die Zeichnungen sind schematische Darstellungen und zeigen:
- Fig. 1: eine Seitenansicht eines Kraftfahrzeugs; und
- Fig. 2: eine Draufsicht auf das Kraftfahrzeug von Fig. 1 in einer ersten Verkehrssituation.

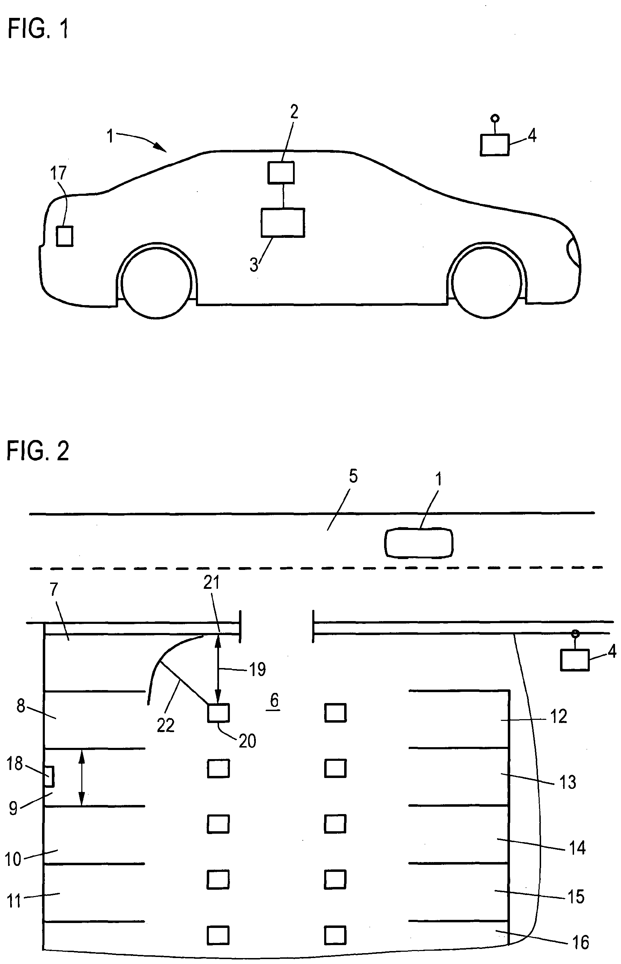

Fig. 1 zeigt ein Kraftfahrzeug 1 mit einer Navigationseinrichtung 2 und einer Steuerungseinrichtung 3. Die Navigationseinrichtung 2 ist mit der Steuerungseinrichtung 3 verbunden. Die Steuerungseinrichtung 3 ist dazu ausgebildet, diverse Funktionen und Einrichtungen des Kraftfahrzeugs 1 zu steuern, insbesondere solche, die zum autonomen Bewegen des Kraftfahrzeugs 1 erforderlich sind. Die Navigationseinrichtung 2 ist dazu ausgebildet mit einem externen Server 4 zu kommunizieren, der mehrere Parkplätze einer Parkfläche verwaltet. Der externe Server 4 kann demnach Informationen an die Navigationseinrichtung 2 darüber übertragen, ob in der entsprechenden Parkfläche ein Parkplatz für das Kraftfahrzeug 1 verfügbar ist.

Fig. 2 zeigt das Kraftfahrzeug 1 von Fig. 1 in einer Draufsicht. Das Kraftfahrzeug 1 befindet sich auf einem Straßenabschnitt 5 in einigem Abstand zu einer Parkfläche 6, die gemäß diesem Ausführungsbeispiel ein Parkhaus darstellt. Der Benutzer initiiert somit bereits vor Erreichen der Parkfläche 6 durch eine entsprechende Eingabe in der Navigationseinrichtung 2, dass eine Anfrage an den externen Server 4 gesendet wird, der die Parkplätze der Parkfläche 6 verwaltet. Die Benutzereingabe umfasst hierbei die Information, dass der Benutzer des Kraftfahrzeugs 1 auf einem der Parkplätze der Parkfläche 6 parken möchte. Diese Anfrage kann bereits lange vor Erreichen der Parkfläche gesendet werden, wenn also das Fahrzeug noch relativ weit von der Parkfläche entfernt ist. Auf der ersten Stufe des beschriebenen Verfahrens besteht die Anfrage lediglich in der prinzipiellen Verfügbarkeit eines an die Abmessungen des Kraftfahrzeugs 1 angepassten Parkplatzes, sowie dessen prinzipielle Erreichbarkeit. Der externe Server 4 überprüft sonach ausgehend von den Abmessungsdaten beziehungsweise den zur Ermittlung benötigten Daten des Kraftfahrzeugs 1, die von der Navigationseinrichtung 2 übermittelt wurden, ob ein entsprechender Parkplatz verfügbar ist und ob dieser auch erreichbar ist. Gemäß diesem Ausführungsbeispiel übermittelt die Navigationseinrichtung dazu die Fahrzeugklasse des Kraftfahrzeugs 1 an den Server 4.

Der externe Server 4 sendet daraufhin die verfügbaren Parkplätze 7 bis 16, die alle für die von der Navigationseinrichtung 2 übermittelte Fahrzeugklasse befahrbar sind, an die Navigationseinrichtung 2 des Kraftfahrzeugs 1.

Daraufhin führt die Navigationseinrichtung eine Routensuche von einem Startknoten zu den Zielknoten durch. Der Startknoten ist gemäß diesem Ausführungsbeispiel der momentane Standort des Kraftfahrzeugs 1, auf dem Straßenabschnitt 5. Die Zielknoten sind hierbei die Parkplätze 7 bis 16, die in der Parkfläche verfügbar sind.

Anschließend ermittelt die Navigationseinrichtung 2 die von dem Startknoten aus zum Erreichen der Zielknoten benötigten Streckensegmente.

Anschließend übersendet die Navigationseinrichtung 2 detailliertere Parameter des Kraftfahrzeugs 1 an den externen Server 4, um eine zweite Erreichbarkeitsprüfung durchzuführen, die gegenüber der ersten Erreichbarkeitsprüfung in wenigstens einer Prüfeigenschaft detaillierter ist. Hierbei handelt es sich explizit um die genauen Abmessungen des Kraftfahrzeugs 1 sowie dessen Radstand, beziehungsweise dessen Wendekreis. Ferner handelt es sich bei dem Kraftfahrzeug 1 gemäß diesem Ausführungsbeispiel um ein Elektrofahrzeug, das einen Ladeanschluss 17 aufweist, der an einer Ladestation 18 angeschlossen werden kann, um einen Energiespeicher des Kraftfahrzeugs 1 aufzuladen. Die Navigationseinrichtung 2 übermittelt somit an den externen Server 4, die genaue Position des Ladeanschlusses 17, so dass dies bei der Eignungsprüfung des wenigstens einen Parkplatzes 7 - 16 berücksichtigt werden kann. Daraufhin führt der externe Server 4 die zweite Erreichbarkeitsprüfung sowie die Eignungsprüfung durch, in der insbesondere der Abstand 19 zwischen einer Säule 20 und einer Wand 21 der Parkfläche 6 berücksichtigt wird. Der Abstand 19 erlaubt hierbei ein Befahren durch das Kraftfahrzeug 1, da das Kraftfahrzeug 1 Abmessungen aufweist, die geringer sind als der Abstand 19. Aus dem Radstand des Kraftfahrzeugs 1 sowie dessen Wendekreis, der von der Navigationseinrichtung 2 an den externen Server 4 übermittelt wurde, bestimmt der externe Server 4, ob der Wendekreis ausreichend ist, um den Radius, der mit Bezugszeichen 22 bezeichnet ist, zu befahren. Da dies ebenfalls der Fall ist, können grundsätzlich alle Parkplätze 7 bis 16 von dem Kraftfahrzeug 1 angefahren werden.

Schließlich wird in der Eignungsprüfung berücksichtigt, dass das Kraftahrzeug 1 einen Ladeanschluss 17 aufweist, der mit der Ladestation 18 gekoppelt werden kann. Demzufolge wird der Parkplatz 9, der eine solche Ladestation 18 aufweist, ermittelt.

Dies wird an die Navigationseinrichtung 2 des Kraftfahrzeugs 1 übertragen, woraufhin diese die Streckensegmente von dem externen Server 4 lädt, die zum Erreichen des Parkplatzes 9, der als Zielknoten definiert ist, benötigt werden. Insbesondere wird als Zielknoten die Ausrichtung des Kraftfahrzeugs auf dem Parkplatz 9 derart festgelegt, dass der Ladeanschluss 17 mit der Ladestation 18 verbindbar ist.

Anschließend berechnet die Navigationseinrichtung wenigstens eine kollisionsfreie Route von dem Startknoten, der sich auf dem Straßenabschnitt 5, also der aktuellen Position des Kraftfahrzeugs 1, befindet, zu dem Zielknoten, also der Zielposition innerhalb des Parkplatzes 9.

Aus den berechneten kollisionsfreien Routen wird sonach diese ausgewählt, die hinsichtlich der Fahrdauer, den benötigten Manövern und den Gesamtkosten optimiert ist. Gemäß diesem Ausführungsbeispiel wird sowohl die Transit-Route vom Startknoten zum Zielknoten, sowie der Einparkvorgang und der anschließende Ausparkvorgang voll autonom durchgeführt.

## Patentansprüche

1. Verfahren zum Ermitteln eines geeigneten Parkplatzes (7 - 16) für ein Kraftfahrzeug (1) sowie einer dorthin führenden Route,
**dadurch gekennzeichnet,**
**dass** das Verfahren die folgenden Stufen umfasst:
- Anfragen wenigstens einer eine Parkplatzsuche betreffende Information durch eine Navigationseinrichtung (2) des Kraftfahrzeugs (1) bei wenigstens einem externen, wenigstens eine wenigstens einen Parkplatz (7 - 16) aufweisende Parkfläche (6) verwaltenden Server (4) vor Erreichen der Parkfläche (6)
- Senden der wenigstens einen angefragten Information von dem externen Server (4) an die Navigationseinrichtung (2) des Kraftfahrzeugs (1)
- Durchführen einer Routensuche von einem Startknoten zu einem Zielknoten durch die Navigationseinrichtung (2), in der eine erste grundsätzliche Erreichbarkeitsprüfung wenigstens eines Zielknotens von wenigstens einem Startknoten aus durchgeführt wird
- Identifizieren wenigstens eines Streckensegments, das zum Erreichen des wenigstens einen Zielknotens von dem wenigstens einen Startknoten aus benötigt wird
- Übersenden von detaillierteren Parametern des Kraftfahrzeugs (1) an den externen Server (4)
- Durchführen einer zweiten Erreichbarkeitsprüfung, die gegenüber der ersten Erreichbarkeitsprüfung in wenigstens einer Prüfeigenschaft detaillierter ist, und einer für wenigstens einen der Parameter des Kraftfahrzeugs (1) spezifischen Eignungsprüfung wenigstens eines Parkplatzes (7 - 16) der Parkfläche (6), wobei die zweite Erreichbarkeitsprüfung und die Eignungsprüfung durch den externen Server (4) durchgeführt werden
- Laden des wenigstens einen identifizierten Streckensegments von dem externen Server (4) in die Navigationseinrichtung (2) des Kraftfahrzeugs (1)
- Berechnen wenigstens einer kollisionsfreien Route.

2. Verfahren nach Anspruch 1,
**dadurch gekennzeichnet,**
**dass** ein momentaner Standort des Kraftfahrzeugs (1) oder ein mittels der Navigationseinrichtung (2) bestimmter Ankunftsort an einer Parkfläche (6) als Startknoten verwendet wird.

3. Verfahren nach Anspruch 1 oder 2,
**dadurch gekennzeichnet,**
**dass** ein Parkplatz (7 - 16) oder eine gewünschte Zielposition des Kraftfahrzeugs (1) innerhalb eines Parkplatzes (7 - 16) als Zielknoten verwendet wird.

4. Verfahren nach Anspruch 3,
**dadurch gekennzeichnet,**
**dass** die Zielposition innerhalb eines Parkplatzes (7 - 16) anhand wenigstens eines detaillierten Streckensegments und/oder einer geometrischen Gegebenheit und/oder abhängig von einer Position einer Laderampe und/oder einer Position einer Ladeeinrichtung und/oder abhängig von einer Nutzerpräferenz bestimmt wird.

5. Verfahren nach einem der vorangehenden Ansprüche,
**dadurch gekennzeichnet,**
**dass** das wenigstens eine Streckensegment wenigstens eine Information umfasst, die wenigstens eine Geometrie des Fahrwegs und/oder eine Referenzbahn und/oder eine Lokalisierung des Streckensegments in der Parkfläche (6) und/oder eine Sensormodalität und/oder einen Parkplatz (7 - 16) und/oder ein Flottendatum und/oder ein Hindernis und/oder einen verfügbaren Manöverraum betrifft.

6. Verfahren nach einem der vorangehenden Ansprüche,
**dadurch gekennzeichnet,**
**dass** das Befahren der berechneten Route teilautonom oder autonom oder manuell erfolgen kann.

7. Verfahren nach einem der vorangehenden Ansprüche,
**dadurch gekennzeichnet,**
**dass** die Anfrage der Navigationseinrichtung (2) wenigstens ein für das Kraftfahrzeug (1) spezifisches Filterkriterium enthält.

8. Verfahren nach einem der vorangehenden Ansprüche,
**dadurch gekennzeichnet,**
**dass** in dem externen Server (4) eine Vorfilterung durchgeführt wird, in der die wenigstens eine an die Navigationseinrichtung (2) des Kraftfahrzeugs (1) zu übertragende Information entsprechend wenigstens einer spezifischen Eigenschaft des Kraftfahrzeugs (1) gefiltert wird.

## Claims

1. Method for identifying a suitable parking space (7-16) for a motor vehicle (1) and a route leading thereto,
**characterised in**
**that** the method comprises the following stages:
- requesting, through a navigation apparatus (2) of the motor vehicle (1), at least one item of information concerning a parking place search from at least one external server (4) that manages at least one parking area (6) having at least one parking space (7-16), before reaching the parking area (6)
- sending the at least one requested item of information from the external server (4) to the navigation apparatus (2) of the motor vehicle (1)
- carrying out, through the navigation apparatus (2), a route search from a start node to a destination node, in which an initial basic accessibility test of at least one destination node from at least one start node is carried out
- identifying at least one route segment that is required in order to reach the at least one destination node from the at least one start node
- transmitting detailed parameters of the motor vehicle (1) to the external server (4)
- carrying out a second accessibility test that is more detailed in at least one test property than the initial accessibility test, and a suitability test of at least one parking space (7-16) of the parking area (6) that is specific for at least one of the parameters of the motor vehicle (1), the second accessibility test and the suitability test being carried out through the external server (4)
- loading the at least one identified route segment from the external server (4) into the navigation apparatus (2) of the motor vehicle (1)
- calculating at least one collision-free route.

2. Method according to claim 1,
**characterised in**
**that** an instantaneous location of the motor vehicle (1) or an arrival location at a parking area (6) determined by the navigation apparatus (2) is used as the start node.

3. Method according to claim 1 or 2,
**characterised in**
**that** a parking space (7-16) or a desired destination position of the motor vehicle (1) within a parking space (7-16) is used as the destination node.

4. Method according to claim 3,
**characterised in**
**that** the destination position within a parking space (7-16) is determined on the basis of at least a detailed route segment and/or a geometric condition and/or in dependence on a position of a loading dock and/or a position of a charging apparatus and/or in dependence on a user preference.

5. Method according to any one of the preceding claims,
**characterised in**
**that** the at least one route segment comprises at least one item of information, which concerns at least a geometry of the roadway and/or a reference path and/or a localisation of the route segment in the parking area (6) and/or a sensor modality and/or a parking space (7-16) and/or an item of fleet data and/or an obstruction and/or an available manoeuvring space.

6. Method according to any one of the preceding claims,
**characterised in**
**that** the driving of the calculated route can occur semi-autonomously or autonomously or manually.

7. Method according to any one of the preceding claims,
**characterised in**
**that** the request of the navigation apparatus (2) contains at least one filter criterion that is specific to the motor vehicle (1).

8. Method according to any one of the preceding claims,
**characterised in**
**that** a pre-filtration is carried out in the external server (4), in which the at least one item of information that is to be communicated to the navigation apparatus (2) of the motor vehicle (1) is filtered in accordance with at least one specific property of the motor vehicle (1).

## Revendications

1. Procédé de détermination d'une place de stationnement (7 à 16) appropriée pour un véhicule automobile (1) et d'un itinéraire y conduisant,
**caractérisé en ce que**
le procédé comprend les étapes suivantes consistant à :
- demander, grâce à un appareil de navigation (2) du véhicule automobile (1) et avant d'atteindre l'aire de stationnement (6), au moins une information relative à une recherche de place de stationnement auprès d'au moins un serveur externe (4) gérant au moins une aire de stationnement (6) présentant au moins une place de stationnement (7 à 16)
- envoyer la au moins une information demandée vers l'appareil de navigation (2) du véhicule automobile (1) depuis le serveur externe (4)
- mettre en œuvre une recherche d'itinéraire à partir d'un nœud de départ jusqu'à un nœud de destination grâce à l'appareil de navigation (2), dans lequel une première vérification d'accessibilité de base d'au moins un nœud de destination à partir d'au moins un nœud de départ est mise en œuvre
- identifier au moins un segment de trajet qui est nécessaire pour atteindre le au moins un nœud de destination à partir du au moins un nœud de départ
- envoyer des paramètres plus détaillés du véhicule automobile (1) au serveur externe (4)
- mettre en œuvre une seconde vérification d'accessibilité, plus détaillée que la première vérification d'accessibilité quant à au moins une propriété de vérification, et une vérification d'adéquation, spécifique à au moins un des paramètres du véhicule automobile (1), d'au moins une place de stationnement (7 à 16) de l'aire de stationnement (6), dans lequel la seconde vérification d'accessibilité et la vérification d'adéquation sont mises en œuvre grâce au serveur externe (4)
- charger le au moins un segment de trajet identifié dans l'appareil de navigation (2) du véhicule automobile (1) depuis le serveur externe (4)
- calculer au moins un itinéraire sans collision.

2. Procédé selon la revendication 1,
**caractérisé en ce qu'**
un emplacement actuel du véhicule automobile (1) ou un emplacement d'arrivée sur une aire de stationnement (6), déterminé au moyen de l'appareil de navigation (2), est utilisé comme nœud de départ.

3. Procédé selon la revendication 1 ou 2,
**caractérisé en ce qu'**
une place de stationnement (7 à 16) ou une position de destination souhaitée du véhicule automobile (1) à l'intérieur d'une place de stationnement (7 à 16) est utilisée comme nœud de destination.

4. Procédé selon la revendication 3
**caractérisé en ce que**
la position de destination à l'intérieur d'une place de parking (7 à 16) est déterminée en se basant sur au moins un segment de trajet détaillé et/ou sur une situation géométrique et/ou en fonction d'une position d'une rampe de chargement et/ou d'une position d'un appareil de chargement et/ou en fonction d'une préférence de l'utilisateur.

5. Procédé selon l'une quelconque des revendications précédentes,
**caractérisé en ce que**
le au moins un segment de trajet comprend au moins une information concernant au moins une géométrie de l'itinéraire et/ou un chemin de référence et/ou une localisation du segment de trajet dans l'aire de stationnement (6) et/ou une modalité de détection et/ou une place de stationnement (7 à 16) et/ou une date de parc automobile et/ou un obstacle et/ou un espace de manœuvre disponible.

6. Procédé selon l'une quelconque des revendications précédentes,
**caractérisé en ce que**
le parcours de l'itinéraire calculé peut se faire de manière manuelle ou partiellement autonome ou autonome.

7. Procédé selon l'une quelconque des revendications précédentes,
**caractérisé en ce que**
la demande de l'appareil de navigation (2) contient au moins un critère de filtrage spécifique au véhicule automobile (1).

8. Procédé selon l'une quelconque des revendications précédentes,
**caractérisé en ce qu'**
un préfiltrage est mis en œuvre dans le serveur externe (4), dans lequel la au moins une information à transmettre à l'appareil de navigation (2) du véhicule automobile (1) est filtrée en fonction d'au moins une propriété spécifique du véhicule automobile (1).
